# EUROPEAN PATENT APPLICATION

(11) **EP 1 775 483 A1**
(43) Date of publication of application: **18.04.2007**
(21) Application number: 05765252.1
(22) Date of filing: 04.07.2005
(51) Int. Cl.: F16B 39/30

(54) **ANTI-LOOSENING SCREW**

(30) Priority: 09.07.2004 JP 2004203622
(71) Applicant: FUKUI BYORA CO. LTD, Fukui 919-0898 (JP)
(72) Inventor: MORISE, Toshimitsu, c/o Fukui Byora Co., Ltd., Awara-shi, Fukui 919-0898 (JP); WATANABE, Hiroshi, c/o Fukui Byora Co., Ltd., Awara-shi, Fukui 919-0898 (JP); HASHIMOTO, Hirofumi, c/o Fukui Byora Co., Ltd., Awara-shi, Fukui 919-0898 (JP); NOZAKI, Yukio, c/o Fukui Byora Co., Ltd., Awara-shi, Fukui 919-0898 (JP)
(74) Representative: Müller, Gottfried
(86) International application number: PCT/JP2005/012345
(87) International publication number: WO 2006/006439

(57) **Abstract**

[PROBLEMS]

An anti-loosening screw sufficiently biting into a female screw in tightening to increase the amount of engagement, increasing frictional force between itself and the female screw. The anti-loosening screw can achieve excellent anti-loosening effect for a long period.

[MEANS FOR SOLVING PROBLEMS]

An anti-loosening screw has a head section (1) and a shaft section (2). At least one thread (3) formed on the shaft section has a crushed thread section (4) formed by crushing a part of the at least one thread. The width of the thread at the crushed thread section is greater than the width at the same height of a thread not crushed and is suddenly narrowed after gradually widened in the rotation direction of the screw.

## Description

### BACKGROUND OF THE INVENTION

### Technical Field

The present invention relates to an anti-loosening screw that is not loosened and maintains stable fastening force for a long period.

### Description of the Related Art

Conventionally, spring washers and locknuts are used to prevent loosening of tightened screws.

Locknuts and spring washers, however, include many components and therefore engage many processes when used. This decreases work efficiency, which leads to increase in labor cost for applying the screws.

Considering the above problems, many approaches have been made to provide screws themselves with an anti-loosening function without using additional components such as spring washers and locknuts.

One typical technique among these is screws that include threads with a modified shape (See Japanese Patent Publication S47-38927).

The screws disclosed in Japanese Patent Publication S47-38927 include threads that are partially deformed to have offset segments. The offset segments increase friction between the threads of the screws and the female threads to produce an anti-loosening effect.

The conventional screws have an advantage that they are manufactured in a simple way and the screws themselves produce an anti-loosening effect. However, since the offset segments have a symmetrical shape along the rotational direction of the screw, the screws do not mate with the female threads with a sufficient contact or with a deep engagement. Therefore, this type of screws sometimes fails to produce a sufficient anti-loosening effect.

### SUMMARY OF INVENTION

Considering the above-mentioned problems, one object of the present invention is to provide screws that mate with the female threads with a sufficient contact and with a deep engagement to produce increased friction with the female threads and a resultant long-lasting anti-loosening effect.

In one embodiment of the present invention, there is provided an anti-loosening screw comprising: a head portion (1); and a shaft portion (2) having one or more threads,wherein at least one of said threads is partially compressed to have a deformation part and a non-deformation part, the top-end width of the deformation part being greater than the width of the non-deformation part at the same height; and wherein said top-end width of said deformation part is suddenly narrowed after gradually widened along the rotational direction of said screw.

In another embodiment of the present invention, the anti-loosening screw further comprises a standard thread section consisting of at least one pitch of uncompressed thread, the standard thread portion being positioned nearer to the distal end of said screw than said deformation part.
In another embodiment of the present invention, said shaft portion has a non-threaded part along a part of its length; and wherein said non-threaded part has a plurality of grooves extending in the longitudinal direction of said screw.

In another embodiment of the present invention, each of said grooves has one sharpened top-edge and the other rounded top-edge so that, when the screw is rotated in the tightening direction, said sharpened top-edge is a leading edge and said rounded top-edge is a trailing edge.

In another embodiment of the present invention, said grooves are located in the opposite side of said deformation part, so that the axis of said shaft portion is positioned between the said grooves and said deformation part.

In another embodiment of the present invention, wherein said shaft portion includes a tapered section (8) extending from the bottom surface of said head portion to said distal end while gradually reducing its diameter; and wherein the maximum diameter of said tapered section is greater than the opening diameter of a threaded hole that engages said screw.

According to one embodiment of the present invention, the deformation part of the screw allows for the screw to eccentrically engage the threaded hole. This results in locally increased friction on flanks of the thread formed on the screw, which results in the excellent anti-loosening effect of the screw.

In this embodiment, the width of the deformation part is larger than the width of uncompressed threads at the same height. The width of the deformation part gradually increases along the rotational direction of the screw and then drastically decreases. This configuration allows for the screw to mate with the female threads with a sufficient contact and a deep engagement while the screw is tightened. This results in a significantly increased friction with the female threads, which enhances the anti-loosening effect of the screw over a long period.

According to another embodiment of the present invention, the screw has a standard thread section positioned nearer to the distal end of the screw than the deformation part. The standard thread section helps in returning the female thread to its original shape from the deformed shape resulting from the fastening of the screw, while the screw is loosened. As a result, the screw repeatedly produces an anti-loosening effect.

According to another embodiment of the present invention, unthreaded section of the screw is provided with grooves extending in the longitudinal direction of the screw. In the case the screw is applied to fasten movable components, when certain torque is exerted to the screw, the grooves mate with the inner surface of the threaded hole of a member to which the screw is applied. As a result, an anti-loosening effect is provided. The grooves are also useful in collecting abrasion debris produced by the rotational movement of the screw.

According to another embodiment of the present invention, each groove has a trailing top-edge of a rounded shape and a leading top-edge of a sharpened shape. When the screw is rotated in the tightening direction, the leading edge engages the inner surface of the threaded hole of a member to which the screw is applied. When the screw is rotated in the loosening direction, neither the leading edge nor the trailing edge engages the inner surface of the threaded hole. Therefore, in the case the screw of the present invention is applied to fasten temples of eyeglasses, the opening and closing operation of the temples is used as a tightening force of the screw to produce an excellent anti-loosening effect.

According to another embodiment of the present invention, the grooves are located on the opposite side of the deformation part so that the axis of the shaft portion is positioned between the grooves and the deformation part. Accordingly, the deformation part and the grooves interactively produce an anti-loosening effect.

According to another embodiment of the present invention, the shaft portion includes a tapered section extending from the bottom surface of the head portion while gradually reducing its diameter. Further, the maximum diameter of the tapered section is larger than the opening diameter of the threaded hole that engages the screw. The tapered portion exerts compression force on the peripheral wall of the threaded hole while the screw is tightened so that an excellent anti-loosening effect is produced.

### BRIEF DESCRIPTION OF THE DRAWINGS

Some embodiments of the anti-loosening screw of the present invention will be described below referring to the accompanying drawings.
FIG. 1 is a side view illustrating a preferred embodiment of the anti-loosening screw of the present invention.
**FIG.** 2 is a cross-sectional view along line A-A in Fig. 1.
**FIG.** 3 is a partial section view (end view) along line B-B.
FIG. 4 is a partial section view of the screw of the present invention. The figure illustrates the cross section of the deformation part along the axial direction of the screw.

### DETAILED DESCRIPTION OF THE INVENTION

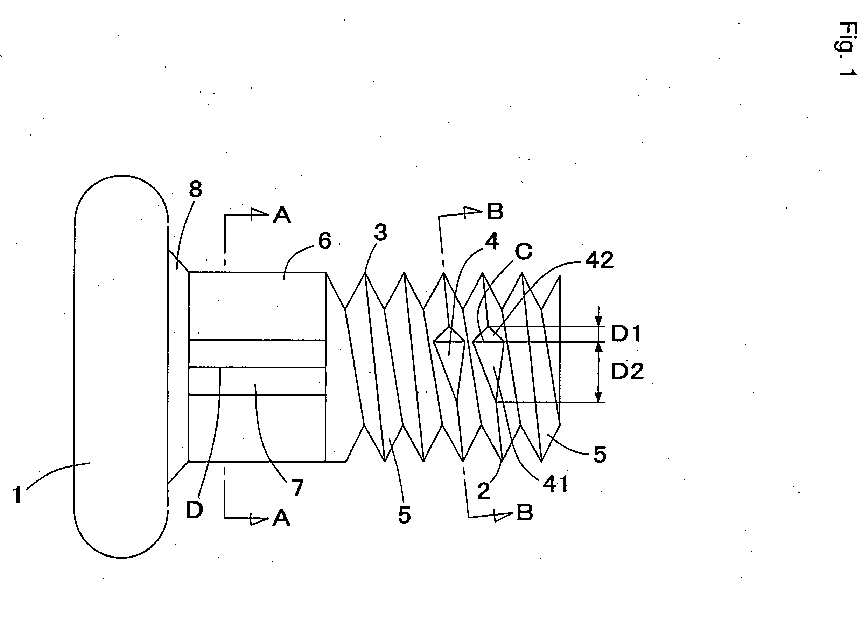

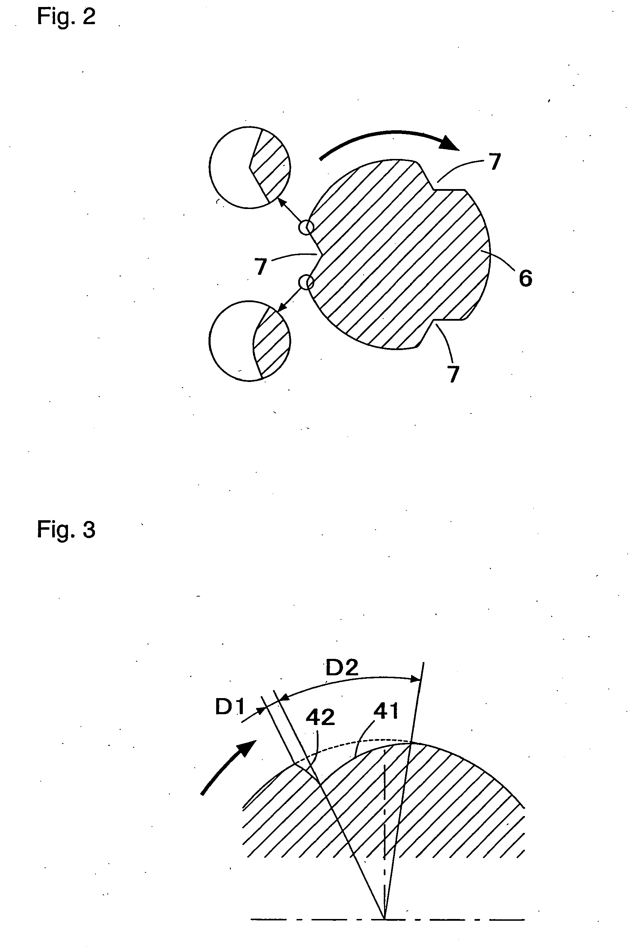

Fig. 1 is a side view illustrating a preferred embodiment of the anti-loosening screw of the present invention. Fig. 2 is a section view along line A-A shown in Fig. 1 and Fig. 3 is a partial section view (end view) along line B-B shown in Fig. 1.

Fig. 1 shows a part of the screw according to the present invention. The distal end of the screw is omitted in this figure.

The anti-loosening screw of the present invention has a head portion (1) and a shaft portion (2). The shaft portion (2) is provided with a plurality of threads (3) formed with a constant pitch.

At least one of the threads (3) has a deformation part (4). The number of threads (3) provided with the deformation part (4) is not particularly limited, but one or plurality of threads (3) may have the deformation part (4). In the present invention, preferably several adjacent threads (3) have the deformation part (4) respectively, as shown in Fig. 1.

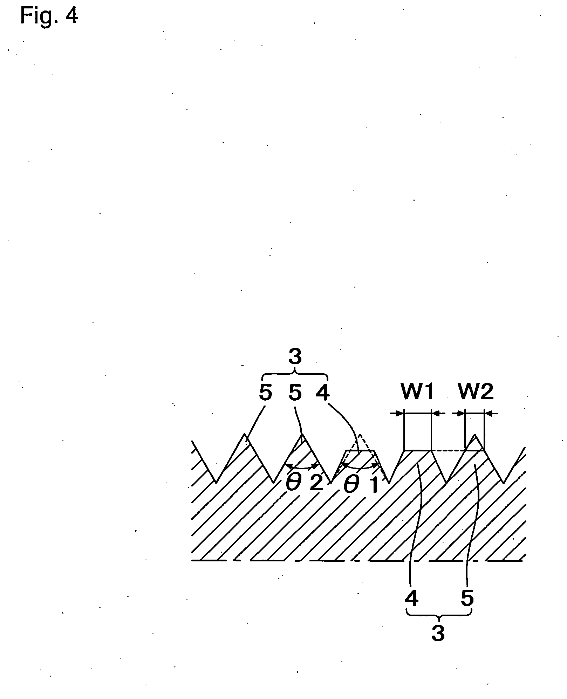

Along one pitch of the thread (3), a part of the thread (3) is compressed to form a deformation part (4). The deformation part (4) is compressed with a mold or the like. When the thread (3) is compressed, the thread material in the compressed part spreads out outwardly so as to widen the thread. The deformation part (4) of the thread (3) has a substantially trapezoidal cross section (See Fig. 4).

The screw provided with the deformation part (4) on a part of its threads (3) engages a threaded hole eccentrically. Accordingly, locally higher stress is caused on the flanks of each thread. This results in a locally higher friction on the flanks, which produces an excellent anti-loosening effect.

Comparing the width of the deformation part (4) and the width of the uncompressed threads at the same height, the deformation part (4) is wider than the uncompressed threads (W1>W2). The angle between the slanted surfaces (flanks) of the compressed threads is smaller than the angle between the flanks of the compressed threads (θ1<θ2) (See Fig. 4). The dotted line in the compressed thread represents the original profile of the thread before compression.

The width of the deformation part (4) gradually increases along the rotational direction of the screw and then drastically decreases (See Fig. 1). In other words, along the rotational direction of the screw, the depth of the deformation part increases gradually and then drastically decreases.

Next, the shape of the deformation part (4) will be described referring to the cross section along the helical direction of the threads.

Along the rotational direction (the direction indicated by the arrow in Fig. 3) of the screw, the height of the thread drastically decreases through a height decremental part (42) and then gradually increases through a height incremental part (41) so that the profile of the deformation part has a substantially L-shape. The angle between the profile of the height incremental part (41) and the tangent line crossing the end point of the height incremental part (41) is larger than the angle between the profile of the height decremental part (42) and the tangent line crossing the end point of the height decremental part (42). In other words, the height incremental part (41) is longer than the height decremental part (42).

In one embodiment of the present invention, the deformation part is configured to have a height incremental part (41) of an arc length (D2), which is equal to 1/4 pitch to 1/3 pitch of the thread (3). The deformation part (4) also has a height decremental part (42) of an arc length (D1), which is zero or approximately as small as zero (e.g. 0.1 mm or less and about 0.03 mm or less in the case of M 1.4 screw).

In this case, the total arc length (D1+D2) of the deformation part (4) is approximately equal to a 1/4 to a 1/3 of one pitch of the thread (3).

In one embodiment of the present invention, at least one pitch of a standard thread section (5) is preferably provided to a position nearer to the distal end than the above-described deformation part (4). In the standard thread section (5), the thread (3) is uncompressed and keeps its original shape. The standard thread section (5) may be positioned nearer to the head portion than the deformation part (4), as shown in Fig. 1.

The deformation part (4) of the screw according to the present invention deforms the female thread while the screw is fastened. While the screw is loosened, the standard thread section (5) returns the female thread to the original shape from the deformed shape. Thus, the screw repeatedly produces an anti-loosening effect.

The screw of the present invention may be threaded along its entire length (full-threaded screw) or threaded along a part of its length (partial-threaded screw).

In the case of a partial-threaded screw, which has an unthreaded part longitudinally extending from the proximal end of the shaft portion (2), the screw is preferably provided with grooves (7) extending along the longitudinal direction of the screw. Substantially any number and any arrangement of the grooves (7) are applicable in the present invention. In the example shown in Fig. 2, three of the grooves (7) are formed equiangularly around the shaft portion.

The grooves (7) formed in the unthreaded part (6) are useful if the screw is applied to engage movable parts (e.g. temples of eyeglasses). If some torque is exerted to the screw, the grooves (7) bite into the inner surface of the threaded hole of a member, to which the screw is applied in order to connect the movable parts, to generate an anti-loosening effect. The grooves (7) are also useful in reserving abrasion debris produced by the rotational movement of the screw resulting from operating the movable parts.

The cross section of the grooves (7) in the direction perpendicular to the longitudinal direction may have a V-shape, a U-shape, a semicircular shape, a semielliptic shape, a trapezoidal shape, or the like. Each of the grooves (7) preferably has one rounded top-edge on the trailing side in the rotational direction (direction indicated by the arrow in Fig. 2) of the screw (See the enlarged view in the upper circle of Fig. 2). The leading top-edge has a sharpened shape (See the enlarged view in the lower circle of Fig. 2).

When the screw is rotated in the tightening direction, the leading edge engages the inner surface of the threaded hole of a member to which the screw is applied. When the screw is rotated in the loosening direction, neither the leading edge nor the trailing edge engages the inner surface of the threaded hole. Thus, when the screw is applied to engage temples of eyeglasses, the force resulting from the pivot movement of the temples is converted into screw fastening force. This improves the anti-loosening effect of the screw.

Although the arrangement of the grooves (7) is not particularly limited as mentioned above, the grooves (7) are preferably arranged on the opposite side of the deformation part (4). In a more preferable arrangement of the grooves (7), the bottom part (D) of the grooves (7) is positioned directly across from the bottom part (boundary between the height incremental part and the height decremental part) of the deformation part (4).

If the grooves (7) are located on the opposite side of the deformation part (4) so that the axis of the shaft portion (2) is positioned between the grooves (7) and the deformation part (4), the deformation part (4) pushes back the screw in the direction from the deformation part (4) toward the grooves (7), when the screw is tightened. Therefore, the anti-loosening effect of the screw is enhanced by the grooves (7) as well as the deformation part (4).

As shown in Fig. 1, the anti-loosening screw of the present invention preferably has a tapered portion (8) axially extending from the bottom surface of the head portion (1) while decreasing its diameter.

The tapered portion has a shape of cone frustum. The generatrix of the cone frustum may form a straight line or an inwardly curved line. In both cases, the maximum diameter of the tapered portion (at the boundary between the tapered portion (8) and the head portion (1)) is preferably greater than the opening diameter of the threaded hole that engages the screw.

This shape of the tapered portion exerts compression force on the peripheral wall of the threaded hole to produce an additional anti-loosening effect.

The present invention is applicable to provide anti-loosening function to set screws, self-tapping screws, bolts, machine screws, wood screws, and the like.

## Claims

1. An anti-loosening screw comprising:
a head portion (1); and
a shaft portion (2) having one or more threads,
wherein at least one of said threads is partially compressed to have a deformation part and a non-deformation part, the top-end width of the deformation part being greater than the width of the non-deformation part at the same height; and
wherein said top-end width of said deformation part is suddenly narrowed after gradually widened along the rotational direction of said screw.

2. The anti-loosening screw of claim 1, further comprising a standard thread section consisting of at least one pitch of uncompressed thread, the standard thread portion being positioned nearer to the distal end of said screw than said deformation part.

3. The anti-loosening screw of claim 1 or claim 2,
wherein said shaft portion has a non-threaded part along a part of its length; and
wherein said non-threaded part has a plurality of grooves extending in the longitudinal direction of said screw.

4. The anti-loosening screw of claim 3,
wherein each of said grooves has one sharpened top-edge and the other rounded top-edge so that, when the screw is rotated in the tightening direction, said sharpened top-edge is a leading edge and said rounded top-edge is a trailing edge.

5. The anti-loosening screw of claim 3 or claim 4,
wherein said grooves are located in the opposite side of said deformation part, so that the axis of said shaft portion is positioned between the said grooves and said deformation part.

6. The anti-loosening screw of any one of claim 1 to claim 5,
wherein said shaft portion includes a tapered section (8) extending from the bottom surface of said head portion to said distal end while gradually reducing its diameter; and
wherein the maximum diameter of said tapered section is greater than the opening diameter of a threaded hole that engages said screw.

## Amended claims

### Amended claims under Art. 19.1 PCT

**1.** An anti-loosening screw comprising:
a head portion (1); and
a shaft portion (2) having one or more threads,
wherein at least one of said threads is partially compressed to have a deformation part and a non-deformation part, the top-end width of the deformation part being greater than the width of the non-deformation part at the same height;
wherein said top-end width of said deformation part is suddenly narrowed after gradually widened along the rotational direction of said screw;
wherein said shaft portion has a standard thread section consisting of at least one pitch of uncompressed thread, the standard thread portion being positioned nearer to the distal end of said screw than said deformation part; and
wherein said shaft portion includes a tapered section (8) extending from the bottom surface of said head portion to said distal end while gradually reducing its diameter, the maximum diameter of said tapered section being greater than the opening diameter of a threaded hole that engages said screw.

**2.** (Deleted)

**3.** The anti-loosening screw of claim 1,
wherein said shaft portion has a non-threaded part along a part of its length; and
wherein said non-threaded part has a plurality of grooves extending in the longitudinal direction of said screw.

**4.** The anti-loosening screw of claim 3,
wherein each of said grooves has one sharpened top-edge and the other rounded top-edge so that, when the screw is rotated in the tightening direction, said sharpened top-edge is a leading edge and said rounded top-edge is a trailing edge.

**5.** The anti-loosening screw of claim 3 or claim 4,
wherein said grooves are located in the opposite side of said deformation part, so that the axis of said shaft portion is positioned between the said grooves and said deformation part.

**6.** (Deleted)
